# EUROPEAN PATENT APPLICATION

(11) **EP 4 245 651 A1**
(43) Date of publication of application: **20.09.2023**
(21) Application number: 21892383.7
(22) Date of filing: 12.11.2021
(51) Int. Cl.: B62D 55/30, F16D 41/00, F16C 19/04, F16C 17/02

(54) **TENSION-MAINTAINING UNIT OF CONTINUOUS TRACK DEVICE FOR SHIP, AND CONTINUOUS TRACK DEVICE FOR SHIP, HAVING SAME**

(30) Priority: 13.11.2020 KR 20200151834; 29.10.2021 KR 20210146669
(71) Applicant: Tas Global Co., Ltd., Busan 46728 (KR)
(72) Inventor: LEE, Dong Wook, Seoul 06098 (KR)
(74) Representative: Keltie LLP
(86) International application number: PCT/KR2021/016586
(87) International publication number: WO 2022/103216

(57) **Abstract**

Disclosed are a tension maintaining unit of a continuous track device for a ship, and a continuous track device including the same. The tension maintaining unit includes: a first output unit connected to a first rotary member of a continuous track body and including a first one-way bearing; a second output unit connected to a second rotary member of the continuous track body and including a second one-way bearing; and an actuator transmitting power to the first output unit and the second output unit, wherein when the continuous track body moves forwards, the first one-way bearing freely rotates to prevent tension of a first power transmission member provided in the continuous track body from being loosened, and the second one-way bearing is actuated by power, and when the continuous track body moves backwards, the second one-way bearing freely rotates to prevent the tension of the first power transmission member from being loosened, and the first one-way bearing is actuated by power.

## Description

### [Technical Field]

The disclosure relates to a continuous track device for a ship, and more particularly to a tension maintaining unit of a continuous track device for a ship, in which continuous tracks are prevented from being released from the continuous track device due to failure in maintaining tension, and a continuous track device including the same.

### [Background Art]

In general, underwater creatures, such as barnacles, sea squirts, serpula, Mediterranean mussels, freshwater clams, green laver, and sea lettuce, are attached to and grown on a hull surface of a ship, thereby causing various damages.

For example, the underwater creatures attached to the hull surface of the ship increase frictional resistance with seawater, and therefore the ship is decreased in sailing speed and increased in fuel consumption, thereby having economical disadvantages.

Conventionally, there has been generally used a cleaning method by which a ship is moved to a land dock and a worker removes attachments from the hull wall of the ship in person by spraying water through a high-pressure hose. This method requires a preparation procedure for moving a ship to be cleaned to the dock, and thus has disadvantages that it takes long time to perform cleaning and many workers are required to be mobilized.

Instead of moving a ship, a diver may get into water and clean the bottom of a ship with cleaning equipment. However, the difficulty of cleaning is high even for divers who are skilled in underwater working environments because it takes long time to clean the large area of a hull and it is difficult to secure a clear view.

The method of cleaning the bottom of a ship by a worker in person has problems that it is difficult to efficiently remove the attachments and many workers are required. By taking such problems into account, there has been disclosed a method of applying paint mixed with highly toxic substances to prevent sea creatures from being attached to and grown on the surface of a ship.

Such a toxic paint applying method pollutes seawater and has harmful effects on other sea creatures, thereby causing another problem of destroying an aquatic ecosystem. Therefore, this method has been banned by international organizations. Further, the toxicity decreases as a certain period of time elapses, and therefore repainting is required after cleaning.

In consideration of all these problems, there has been disclosed a technology in which a cleaning robot removes attachments while traveling on the wall of a submerged hull.

Meanwhile, when the tension of continuous tracks is loosened while the cleaning robot travels to clean the ship, the continuous tracks is released. The continuous tracks are released for the following reasons: i) when the tension of the continuous tracks is loosened, ii) when a foreign material is caught between a track link and an idler or a sprocket, iii) when the track link is misaligned with the idler, sprocket, upper and lower rollers, and iv) when being traveled in a state that the track link is not level.

In addition, the tension is loosened by excessive force applied to a tensioner supporting the track link, and the reasons are as follows: i) when backward movement of a ship cleaning vehicle is obstructed by an obstacle or external force, and ii) when the continuous tracks are rotated in a backward direction while the ship cleaning vehicle turns in place.

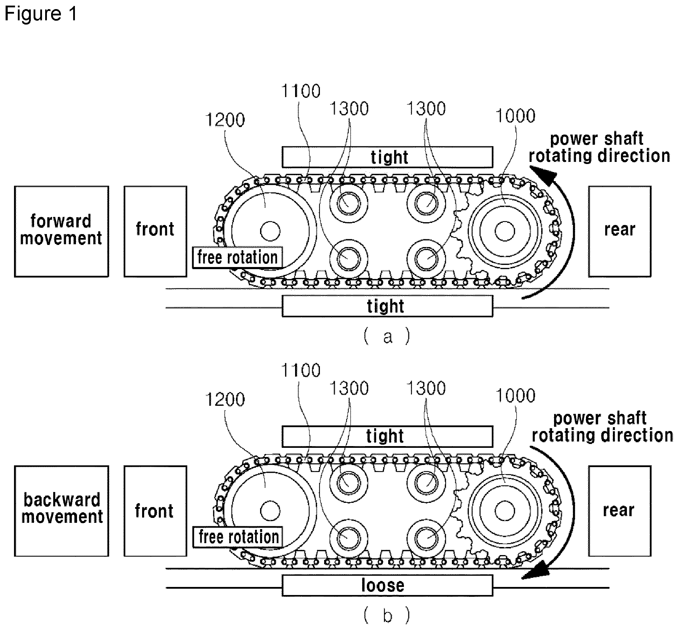

FIG. 1 illustrates that the continuous tracks are loosened in a case where the idler and the tensioner are provided as a single body.

Referring to FIG. 1, a sprocket 1000 is disposed at the right side, and a track link 1100 has a right portion supported by the sprocket 1000 and the other portion supported by an idler 1200. In addition, an upper portion and a lower portion of the track link 1100 are supported by four roller members 1300.

As shown in (a) of FIG. 1, when the continuous tracks move forwards, i.e., when the track link 1100 rotates counterclockwise, the continuous tracks are maintained tight.

On the other hand, as shown in (b) of FIG. 1, when the continuous tracks are obstructed by an obstacle or external force while moving backwards, force is applied to the tensioner and the continuous tracks are loosened in a region thereof being in contact with the ground.

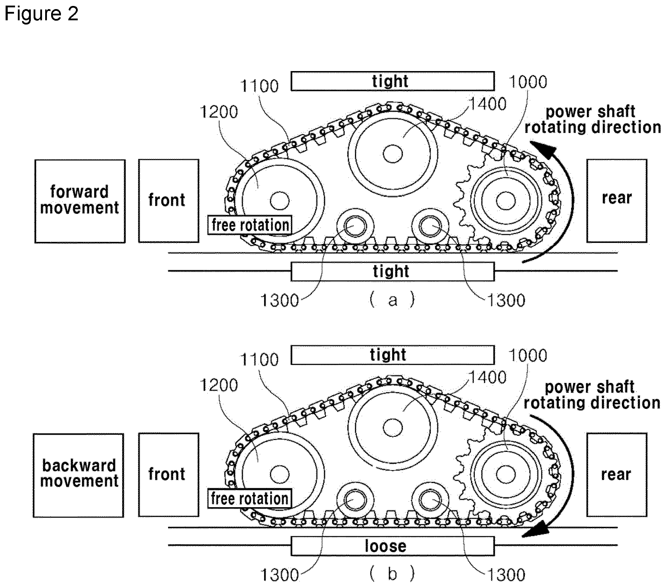

FIG. 2 illustrates that the continuous tracks are loosened in a case where the idler and the tensioner are provided as separate bodies.

As shown in (a) of FIG. 2, when the continuous tracks move forwards, i.e., when the track link 1100 rotates counterclockwise, the continuous tracks are maintained tight.

On the other hand, as shown in (b) of FIG. 2, when the continuous tracks are obstructed by an obstacle or external force while moving backwards, force is applied to a tensioner 1400 and the continuous tracks are loosened in a region thereof being in contact with the ground.

The foregoing technical configurations are the background art for helping the understanding of the disclosure, and do not mean the prior art widely known in the art to which the disclosure pertains.

### (Documents of Related Art)

### (Patent Documents)

(Patent document 1) Korean Patent No. 10-1069916 (Samsung Heavy Industries Co., Ltd.), September 27, 2011.

### [Disclosure]

### [Technical Problem]

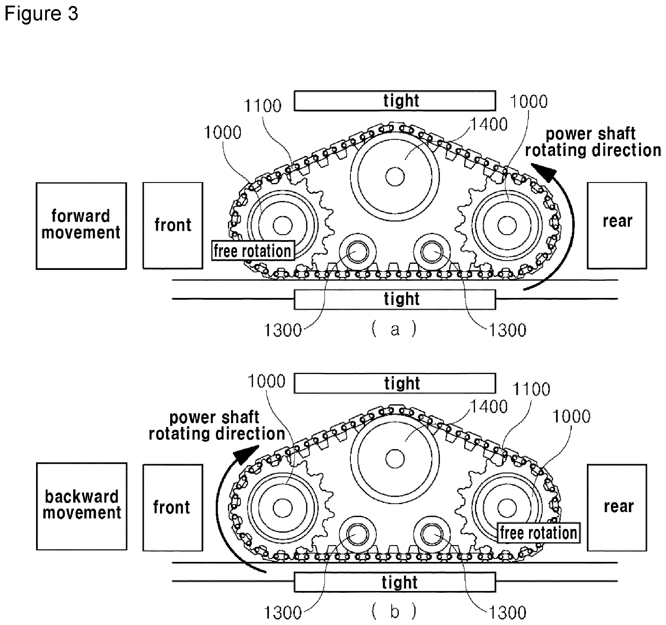

To prevent the continuous tracks from being loosened as described above, as shown in FIG. 3, if the idler is replaced by the sprocket to transmit power frontwards the front and rear sprockets are rotated to have the same number of revolutions, a portion of the track link being in contact with the lower roller member may be loosened or tightened because it moves without being affected by the tensioner.

To tighten the continuous tracks being in contact with the bottom, the power is transmitted to the rear sprocket while the front sprocket freely moves without the transmission of the power in the case where the continuous tracks move forwards, but the power is transmitted to the front sprocket while the rear sprocket freely moves without the transmission of the power in the case where the continuous tracks move backwards.

Accordingly, based on the above-described principle, an aspect of the disclosure is to provide a tension maintaining unit of a continuous track device for a ship, in which continuous tracks are prevented from being released from the continuous track device due to failure in maintaining the tension of the continuous tracks, and a continuous track device including the same.

### [Technical Solution]

According to an embodiment of the disclosure, there is provided a tension maintaining unit of a continuous track device for a ship, including: a first output unit connected to a first rotary member of a continuous track body and including a first one-way bearing; a second output unit connected to a second rotary member of the continuous track body and including a second one-way bearing; and an actuator transmitting power to the first output unit and the second output unit, wherein when the continuous track body moves forwards, the first one-way bearing freely rotates to prevent tension of a first power transmission member provided in the continuous track body from being loosened, and the second one-way bearing is actuated by power, and when the continuous track body moves backwards, the second one-way bearing freely rotates to prevent the tension of the first power transmission member from being loosened, and the first one-way bearing is actuated by power.

The first output unit may include: a first connector coupled to the first rotary member; the first one-way bearing coupled to the first connector; and a first pulley including a first side coupled to the first one-way bearing and a second side coupled to a second power transmission member and rotating along with the second power transmission member.

The second output unit may include: a second connector coupled to the second rotary member; the second one-way bearing coupled to the second connector; and a second pulley including a first side coupled to the second one-way bearing and a second side coupled to a second power transmission member and rotating along with the second power transmission member.

The tension maintaining unit may further include: a pair of idlers disposed above the first output unit and the second output unit and pressing a second power transmission member in a region of connecting the first output unit and the actuator and a region of connecting the second output unit and the actuator.

The actuators may form a pair and be respectively connected to the first output unit and the second output unit.

The first one-way bearing may include a first side directly connected to the first rotary member and a second side directly connected to the actuator.

The second one-way bearing may include a first side directly connected to the second rotary member and a second side directly connected to the actuator, and the actuators may form a pair and be respectively connected to the first one-way bearing and the second one-way bearing.

The first rotary member and the second rotary member may be provided in the form of timing pulleys or sprockets.

The first power transmission member may include a track link, and the second power transmission member connecting the first output unit, the second output unit, and the actuator may include a belt.

The tension maintaining unit may further include a tension maintaining tensioner supporting a second power transmission member in a region of connecting the first output unit and the second output unit.

According to another embodiment of the disclosure, there is provided continuous track device for a ship, including: a continuous track body including a first rotary member supporting a first side of a first power transmission member and rotating along with the first power transmission member, and a second rotary member disposed to be spaced apart from the first rotary member and supporting a second side of the first power transmission member; and a tension maintaining unit including a first output unit connected to the first rotary member and including a first one-way bearing, a second output unit connected to the second rotary member and including a second one-way bearing, and an actuator transmitting power to the first output unit and the second output unit, wherein when the continuous track body moves forwards, the first one-way bearing freely rotates to prevent tension of a first power transmission member provided in the continuous track body from being loosened, and the second one-way bearing is actuated by power, and when the continuous track body moves backwards, the second one-way bearing freely rotates to prevent the tension of the first power transmission member from being loosened, and the first one-way bearing is actuated by power.

The tension maintaining unit may further include a tension maintaining tensioner supporting a second power transmission member in a region of connecting the first output unit and the second output unit.

### [Advantageous Effects]

According to embodiments of the disclosure, the first one-way bearing freely rotates and prevents the tension of the first power transmission member provided in the continuous track body from being loosened when the continuous track body moves forwards, and the second one-way bearing freely rotates and prevents the tension of the first power transmission member from being loosened when the continuous track body moves backwards, thereby preventing the continuous tracks from being released due to failure in maintaining the tension of the continuous tracks of the continuous track device.

### [Description of Drawings]

FIG. 1 illustrates that continuous tracks are loosened when an idler and a tensioner are provided as a single body.
FIG. 2 illustrates that continuous tracks are loosened when an idler and a tensioner are provided as separate bodies.
FIG. 3 schematically illustrates a principle of preventing continuous tracks from being loosened.
FIG. 4 schematically illustrates a continuous track device for a ship according to an embodiment of the disclosure.
FIG. 5 is an exploded perspective view of the continuous track device of FIG. 4.
FIG. 6 is an exploded perspective view of a first output unit and a second output unit shown in FIG. 5.
FIG. 7 is a schematic front view of a tension maintaining unit shown in FIG. 5.
FIG. 8 is an operational view of the tension maintaining unit shown in FIG. 7.
FIG. 9 shows another embodiment of the tension maintaining unit shown in FIG. 5.
FIG. 10 is an exploded perspective view of the tension maintaining unit of FIG. 9.
FIG. 11 shows still another embodiment of the tension maintaining unit shown in FIG. 5.
FIG. 12 is an exploded perspective view of the tension maintaining unit of FIG. 11.
FIG. 13 schematically illustrates that a first rotary member, a first one-way bearing, and an actuator shown in FIG. 12 are coupled.

### [Best Mode]

To fully understand the disclosure, operational advantages of the disclosure, and objects to be achieved by an embodiment of the disclosure, the accompanying drawings illustrating exemplary embodiments of the disclosure and details described in the accompanying drawings are required to be referred to.

Embodiments of the disclosure will now be described in detail with reference to the accompanying drawings. In the accompanying drawings, like numerals refer to like elements.

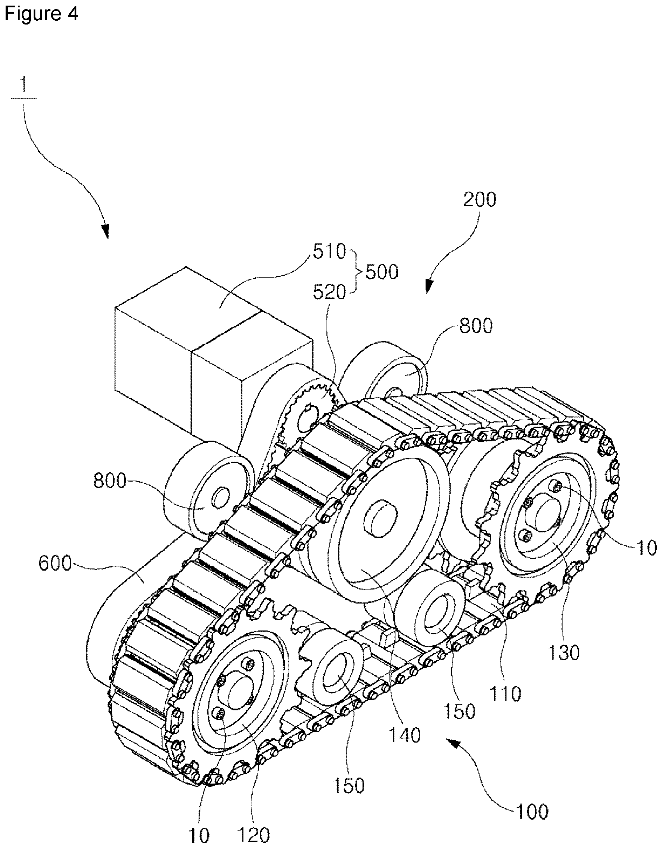

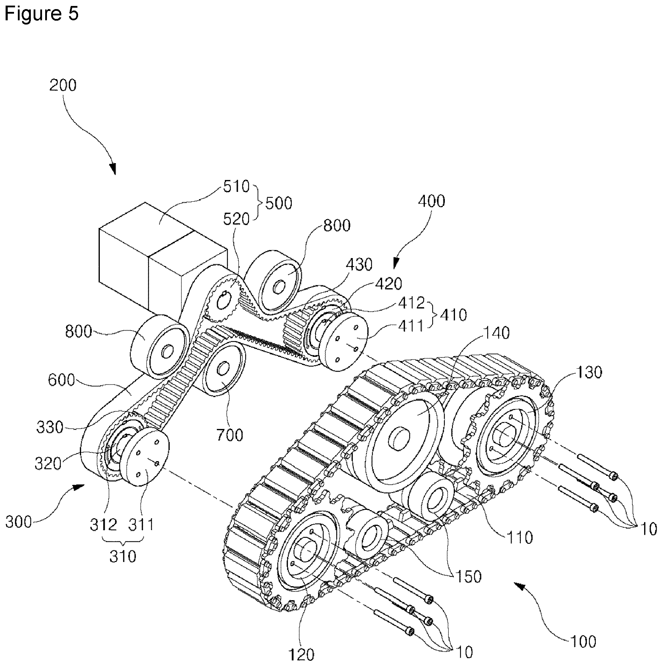

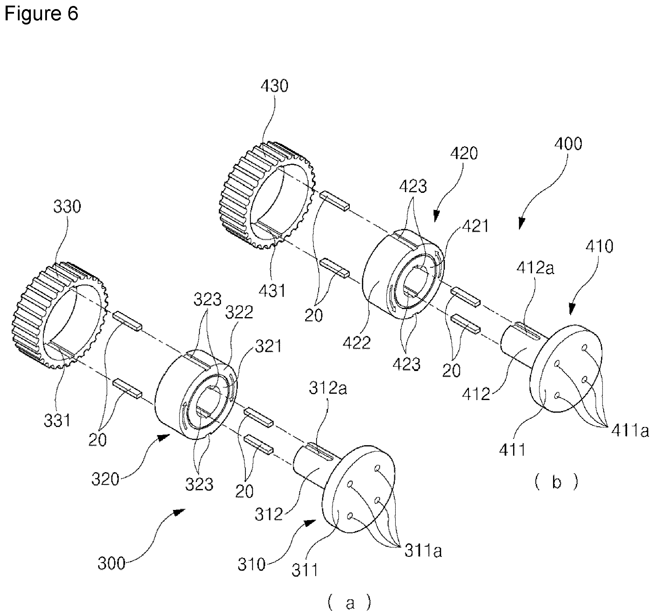

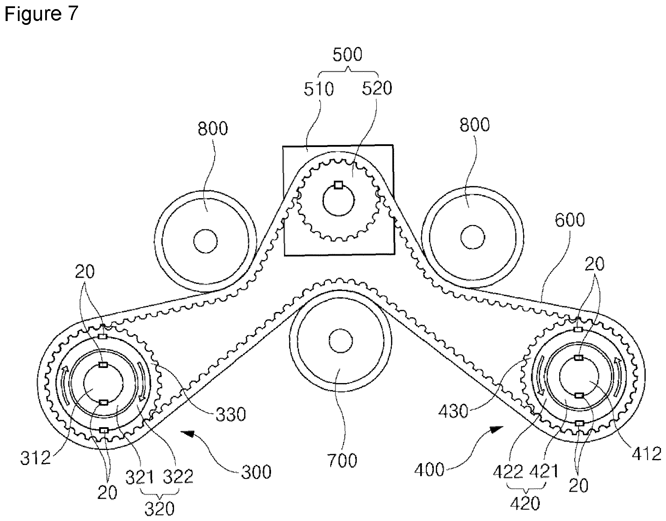

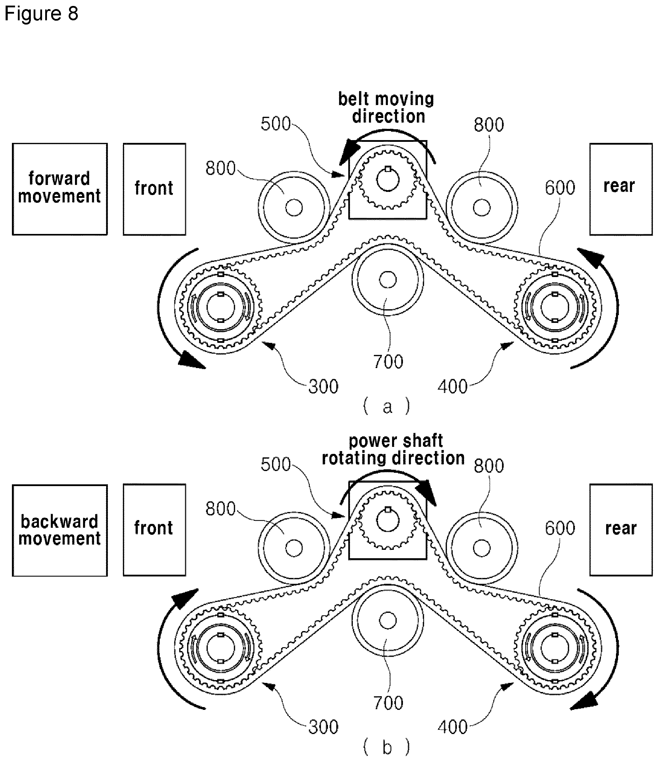

FIG. 4 schematically illustrates a continuous track device for a ship according to an embodiment of the disclosure, FIG. 5 is an exploded perspective view of the continuous track device of FIG. 4, FIG. 6 is an exploded perspective view of a first output unit and a second output unit shown in FIG. 5, FIG. 7 is a schematic front view of a tension maintaining unit shown in FIG. 5, and FIG. 8 is an operational view of the tension maintaining unit shown in FIG. 7.

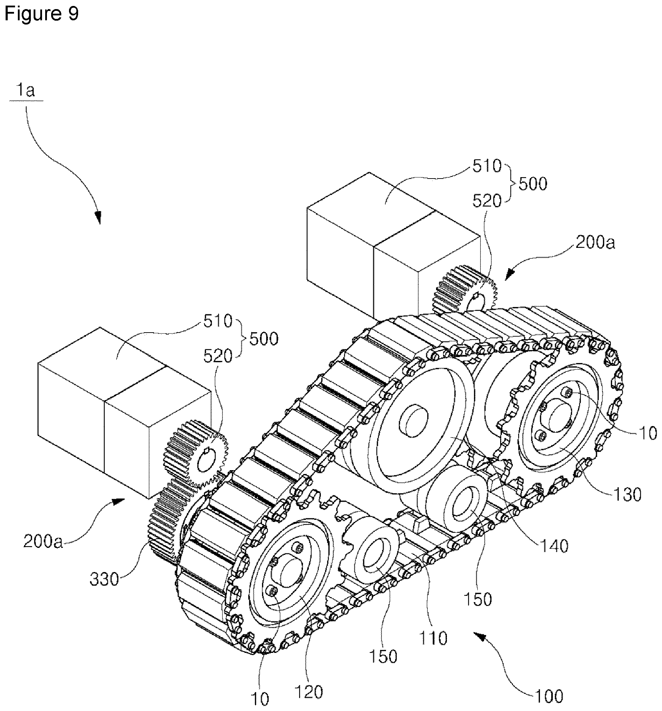

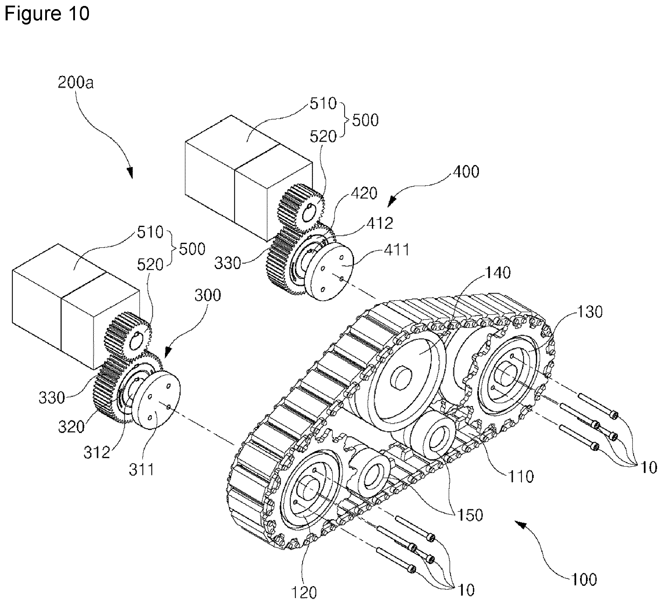

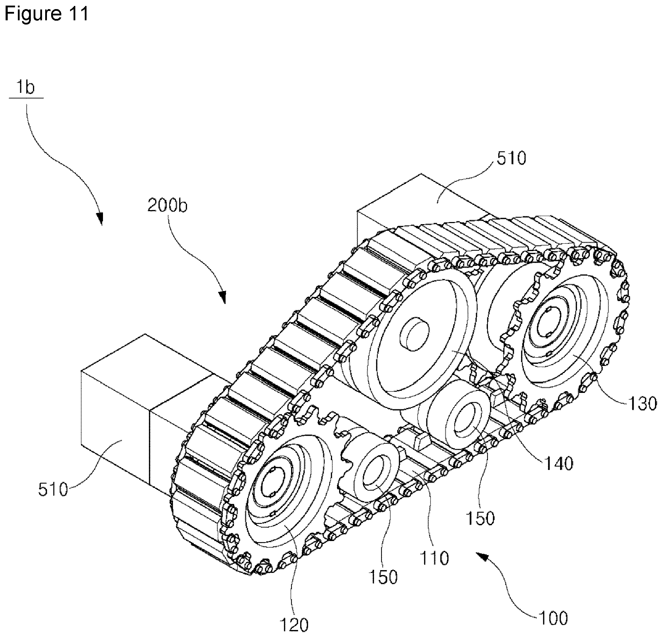

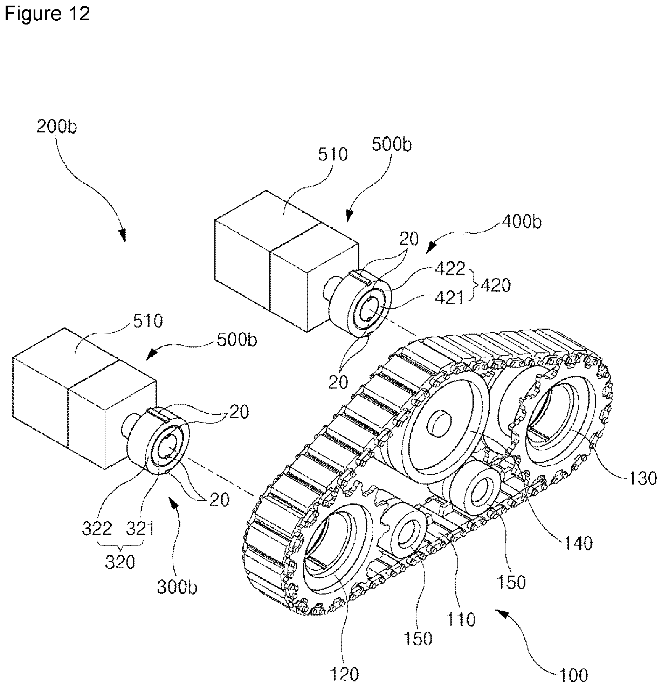

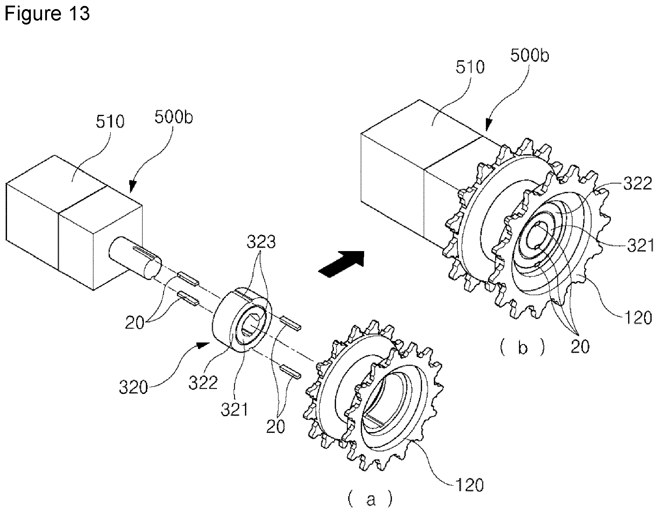

Further, FIG. 9 shows another embodiment of the tension maintaining unit shown in FIG. 5, FIG. 10 is an exploded perspective view of the tension maintaining unit of FIG. 9, FIG. 11 shows still another embodiment of the tension maintaining unit shown in FIG. 5, FIG. 12 is an exploded perspective view of the tension maintaining unit of FIG. 11, and FIG. 13 schematically illustrates that a first rotary member, a first one-way bearing, and an actuator shown in FIG. 12 are coupled.

As shown therein, a continuous track device 1 for a ship according to an embodiment includes a continuous track body 100 actuated as being coupled to a main body of a ship cleaning apparatus, and a tension maintaining unit 200 connected to the continuous track body 100 and maintaining tension by preventing a first power transmission member 110 provided in the continuous track body 100 from being loosened.

The continuous track body 100 is coupled to the main body of the ship cleaning apparatus, and receives power from a power transmission means provided in the main body so that the ship cleaning apparatus can move forwards or backwards.

In this embodiment, the continuous track body 100 includes the first power transmission member 110; a first rotary member 120 disposed at a front portion of the first power transmission member 110, supporting the first power transmission member 110, and rotating along with the first power transmission member 110; a second rotary member 130 disposed at a rear portion of the first power transmission member 110, supporting the first power transmission member 110, and rotating along with the first power transmission member 110; a body tensioner 140 disposed in an upper portion between the first rotary member 120 and the second rotary member 130 and supporting the upper portion of the first power transmission member 110, and a plurality of roller members 150 disposed between the first rotary member 120 and the second rotary member 130 and supporting a lower portion of the first power transmission member 110.

The first power transmission member 110 of the continuous track body 100 may include a track link. Further, in this embodiment, the first power transmission member 110 may be provided by coupling track shoes to a timing belt at regular intervals.

The first rotary member 120 and the second rotary member 130 of the continuous track body 100 may, as shown in FIG. 4, be provided as timing pulleys. In this embodiment, the first rotary member 120 and the second rotary member 130 may be provided as sprockets.

The body tensioner 140 of the continuous track body 100 may, as shown in FIG. 4, be larger than a pair of roller members 150 and support the first power transmission member 110. In this embodiment, the pair of roller members 150 may be selectively used.

The tension maintaining unit 200 may, as shown in FIG. 4, be coupled to the continuous track body 100 and prevent the tension of the first power transmission member 110 from being loosened no matter which direction continuous track body 100 moves in because a front region thereof serves as an idler when the continuous track body 100 move forwards and a rear region thereof serves as the idler when the continuous track body 100 moves backwards.

In this embodiment, the tension maintaining unit 200 may, as shown in FIG. 5, include a first output unit 300 connected to the first rotary member 120 of the continuous track body 100 and provided with a first one-way bearing 320; a second output unit 400 connected to the second rotary member 130 of the continuous track body 100 and provided with a second one-way bearing 420; an actuator 500 transmitting power to the first output unit 300 and the second output unit 400; a second power transmission actuator 600 connecting the first output unit 300, the second output unit 400 and the actuator 500; a tension maintaining tensioner 700 supporting the second power transmission actuator 600 in a region of connecting the first output unit 300 and the second output unit 400; and a pair of idlers 800 disposed above the first output unit 300 and the second output unit 400 and pressing the second power transmission actuator 600 in a region of connecting the first output unit 300 and the actuator 500 and a region of connecting the second output unit 400 and the actuator 500.

The first output unit 300 freely rotates when the continuous track body 100 moves forwards, thereby preventing the tension of the first power transmission member 110 provided in the continuous track body 100 from being loosened. As shown in FIG. 5, the first output unit 300 may be detachably screw-coupled to the first rotary member 120 by a plurality of fastening members 10.

In this embodiment, the first output unit 300 may, as shown in FIGS. 5 and 6, include a first connector 310 coupled to the first rotary member 120 by the plurality of fastening members 10, the first one-way bearing 320 coupled to the first connector 310; and a first pulley 330 having a first side coupled to the first one-way bearing 320 and a second side coupled to the second power transmission actuator 600 and rotating along with the second power transmission actuator 600.

The first connector 310 of the first output unit 300, as shown in FIG. 5, includes a first flange 311 coupled to the first rotary member 120 by a plurality of first grooves 311a and the plurality of fastening members 10; and a first body 312 provided in the first flange 311 and coupled to a first fixed ring 321 of the first one-way bearing 320 by a plurality of pin members 20. In this embodiment, the plurality of fastening members 10 may be detachably screw-coupled to the plurality of first grooves 311a via a plurality of holes formed in the first rotary member 120. In this embodiment, the first body 312 is provided with a plurality of first coupling grooves 312a to which the pin members 20 are coupled.

The first one-way bearing 320 of the first output unit 300, as shown in FIG. 5, includes the first fixed ring 321 coupled to the first body 312, and a first rotary ring 322 rotatably coupled to an outer wall of the first fixed ring 321, and, as shown in FIG. 6, includes a plurality of first ring grooves 323 formed on an inner wall of the first fixed ring 321 and an outer wall of the first rotary ring 322 and provided as a fitting-coupling places for the pin members.

In this embodiment, power may be transmitted to the first fixed ring 321 when the first rotary ring 322 rotates in a specific direction, but may not be transmitted to the first fixed ring 321 when the first rotary ring 322 rotates in a direction opposite to the specific direction.

In this embodiment, the first one-way bearing 320 may, as shown in FIG. 8, be mounted to transmit power clockwise.

The first pulley 330 of the first output unit 300 may, as shown in FIG. 6, be coupled to the outer wall of the first rotary ring 322 through a plurality of first pin grooves 331 formed in an inner wall thereof and the plurality of pin members 20.

The second output unit 400 freely rotates when the continuous track body 100 moves backwards, thereby preventing the tension of the first power transmission member 110 from being loosened. As shown in FIG. 5, the second output unit 400 may be detachably coupled to the second rotary member 130 by the plurality of fastening members 10.

In this embodiment, the second output unit 400 may, as shown in FIG. 5, include a second connector 410 coupled to the second rotary member 130, the second one-way bearing 420 coupled to the second connector 410, and a second pulley 430 having a first side coupled to the second one-way bearing 420 and a second side coupled to the second power transmission actuator 600 and rotating along with the second power transmission actuator 600.

The second connector 410 of the second output unit 400, as shown in FIG. 5, includes a second flange 411 coupled to the second rotary member 130 by a plurality of second grooves 411a and the plurality of fastening members 10, and a second body 412 provided in the second flange 411 and coupled to a second fixed ring 421 of the second one-way bearing 420 by the plurality of pin members 20. In this embodiment, the plurality of fastening members 10 may be detachably screw-coupled to the plurality of second grooves 411a via a plurality of holes formed in the second rotary member 130. In this embodiment, the second body 412 is provided with a plurality of second coupling grooves 412a to which the pin members 20 are coupled.

The second one-way bearing 420 of the second output unit 400, as shown in FIG. 5, includes the second fixed ring 421 coupled to the second body 412, and a second rotary ring 422 rotatably coupled to an outer wall of the second fixed ring 421, and, as shown in FIG. 6, includes a plurality of second ring grooves 423 formed on an inner wall of the second fixed ring 421 and an outer wall of the second rotary ring 422 and provided as a fitting-coupling places for the pin members.

In this embodiment, power may be transmitted to the second fixed ring 421 when the second rotary ring 422 rotates in a specific direction, but may not be transmitted to the second fixed ring 421 when the second rotary ring 422 rotates in a direction opposite to the specific direction.

In this embodiment, the second one-way bearing 420 may, as shown in FIG. 8, be mounted to transmit power counterclockwise.

The second pulley 430 of the second output unit 400 may, as shown in FIG. 6, be coupled to the outer wall of the second rotary ring 422 through a plurality of second pin grooves 431 formed in an inner wall thereof and the plurality of pin members 20.

The actuator 500 may, as shown in FIG. 5, be connected to an upper middle portion of the second power transmission actuator 600 and provide power for rotating the second power transmission actuator 600.

In this embodiment, the actuator 500 may, as shown in FIG. 5, include an actuation motor 510, and an actuation pulley 520 coupled to a shaft of the actuation motor 510, rotating along with the shaft, and engaging with the second power transmission actuator 600.

The second power transmission actuator 600 may, as shown in FIG. 5, include an inner wall to be engaged with the first pulley 330, the second pulley 430, and the actuation pulley 520, and, as shown in FIG. 8, rotate clockwise or counterclockwise.

In this embodiment, the second power transmission actuator 600 may, as shown in FIG. 5, have upper outer walls supported on a pair of idlers 800, and a lower center outer wall supported on the tension maintaining tensioner 700.

Further, in this embodiment, the second power transmission actuator 600 may be provided in the form of a belt.

The tension maintaining tensioner 700 may, as shown in FIG. 5, support the lower center outer wall of the second power transmission actuator 600, thereby giving tension to the second power transmission actuator 600.

In this embodiment, the tension maintaining tensioner 700 may be coupled to the main body of the ship cleaning apparatus by a shaft.

The pair of idlers 800 may, as shown in FIG. 7, be disposed below the actuation pulley 520 and support the upper outer wall of the second power transmission actuator 600.

Below, the operations of the tension maintaining unit 200 will be described in brief with reference to FIG. 8.

First, when the continuous track body 100 moves forwards, power is transmitted as follows.

By the power of the actuation motor 510, the first pulley 330 and the second pulley 430 are rotated counterclockwise having the same number of revolutions. In this case, the first one-way bearing 320 transmits power only when receiving a clockwise input. Therefore, the first output unit 300 freely rotates. On the other hand, the second one-way bearing 420 transmits power only when receiving a counterclockwise input. Therefore, the power is transmitted to the second output unit 400.

Next, when the continuous track body 100 moves backwards, power is transmitted as follows.

By the power of the actuation motor 510, the first pulley 330 and the second pulley 430 are rotated clockwise having the same number of revolutions. In this case, the first one-way bearing 320 transmits power only when receiving a clockwise input. Therefore, the power is transmitted to the first output unit 300. On the other hand, the second one-way bearing 420 transmits power only when receiving a counterclockwise input. Therefore, the second output unit 400 freely rotates.

In other words, the first rotary member 120 serves as the idler when the continuous track body 100 moves forwards, and the second rotary member 130 serves as the idler when the continuous track body 100 moves backwards. Therefore, the tension of the first power transmission member 110 is not loosened no matter which direction the continuous track body 100 travels in.

Meanwhile, in this embodiment, a tension maintaining unit 200a of a continuous track device 1a for a ship may, as shown in FIGS. 10 and 11, only include a first output unit 300, a second output unit 400, and actuators 500. In this case, the actuators 500 may form a pair, and be respectively connected to the first output unit 300 and the second output unit 400, thereby transmitting power independently of each other.

In this case, the second power transmission actuator 600, the tension maintaining tensioner 700, and the pair of idlers 800 are not required, thereby having advantages of providing a simple structure and reducing manufacturing costs.

Further, in a tension maintaining unit 200b of a continuous track device 1b for a ship according to an embodiment may, as shown in FIGS. 11 to 13, a first output unit 300b is directly coupled to the first rotary member 120 by the plurality of pin members 20, and a second output unit 400b may be directly coupled to the second rotary member 130 by the plurality of pin members 20. In this case, a pair of actuation motors 510 of an actuator 500b may, as shown in FIG. 12, include shafts respectively coupled to the first fixed ring 321 and the second fixed ring 421 by the plurality of pin members 20.

It will be obvious to those skilled in the art that the disclosure is not limited to the embodiments described above and various modifications and changes can be made without departing from the spirit and scope of the disclosure. Therefore, such modifications and changes fall within the scope of the appended claims of the disclosure.

### (Reference Numerals)

1 : continuous track device for a ship
100 : continuous track body 110 : first power transmission member
120 : first rotary member 130 : second rotary member
140 : body tensioner 150 : roller member
200,200a,200b : tension maintaining unit 300,300b : first output unit
310 : first connector 311 : first flange
311a : first groove 312 : first body
312a : first coupling groove 320 : first one-way bearing
321 : first fixed ring 322 : first rotary ring
323 : first ring groove 330 : first pulley
331 : first pin groove 400,400b : second output unit
410 : second connector 411 : second flange
411a : second groove 412 : second body
412a : second coupling groove 420 : second one-way bearing
421 : second fixed ring 422 : second rotary ring
423 : second ring groove 430 : second pulley
431 : second pin groove 500,500b : actuator
510 : actuation motor 520 : actuation pulley
600 : second power transmission member 700 : tension maintaining tensioner
800 : idler

## Claims

1. A tension maintaining unit of a continuous track device for a ship, comprising:
a first output unit connected to a first rotary member of a continuous track body and comprising a first one-way bearing;
a second output unit connected to a second rotary member of the continuous track body and comprising a second one-way bearing; and
an actuator transmitting power to the first output unit and the second output unit, wherein
when the continuous track body moves forwards, the first one-way bearing freely rotates to prevent tension of a first power transmission member provided in the continuous track body from being loosened, and the second one-way bearing is actuated by power, and
when the continuous track body moves backwards, the second one-way bearing freely rotates to prevent the tension of the first power transmission member from being loosened, and the first one-way bearing is actuated by power.

2. The tension maintaining unit of claim 1, wherein
the first output unit comprises:
a first connector coupled to the first rotary member;
the first one-way bearing coupled to the first connector; and
a first pulley comprising a first side coupled to the first one-way bearing and a second side coupled to a second power transmission member and rotating along with the second power transmission member.

3. The tension maintaining unit of claim 1, wherein
the second output unit comprises:
a second connector coupled to the second rotary member;
the second one-way bearing coupled to the second connector; and
a second pulley comprising a first side coupled to the second one-way bearing and a second side coupled to a second power transmission member and rotating along with the second power transmission member.

4. The tension maintaining unit of claim 1, further comprising:
a pair of idlers disposed above the first output unit and the second output unit and pressing a second power transmission member in a region of connecting the first output unit and the actuator and a region of connecting the second output unit and the actuator.

5. The tension maintaining unit of claim 1, wherein
the actuators form a pair and are respectively connected to the first output unit and the second output unit.

6. The tension maintaining unit of claim 1, wherein
the first one-way bearing comprises a first side directly connected to the first rotary member and a second side directly connected to the actuator,
the second one-way bearing comprises a first side directly connected to the second rotary member and a second side directly connected to the actuator, and
the actuators form a pair and are respectively connected to the first one-way bearing and the second one-way bearing.

7. The tension maintaining unit of claim 1, wherein
the first rotary member and the second rotary member are provided in the form of timing pulleys or sprockets.

8. The tension maintaining unit of claim 1, wherein
the first power transmission member comprises a track link, and
the second power transmission member connecting the first output unit, the second output unit, and the actuator comprises a belt.

9. The tension maintaining unit of claim 1, further comprising a tension maintaining tensioner supporting a second power transmission member in a region of connecting the first output unit and the second output unit.

10. A continuous track device for a ship, comprising:
a continuous track body comprising a first rotary member supporting a first side of a first power transmission member and rotating along with the first power transmission member, and a second rotary member disposed to be spaced apart from the first rotary member and supporting a second side of the first power transmission member; and
a tension maintaining unit comprising a first output unit connected to the first rotary member and comprising a first one-way bearing, a second output unit connected to the second rotary member and comprising a second one-way bearing, and an actuator transmitting power to the first output unit and the second output unit, wherein
when the continuous track body moves forwards, the first one-way bearing freely rotates to prevent tension of a first power transmission member provided in the continuous track body from being loosened, and the second one-way bearing is actuated by power, and
when the continuous track body moves backwards, the second one-way bearing freely rotates to prevent the tension of the first power transmission member from being loosened, and the first one-way bearing is actuated by power.

11. The continuous track device of claim 10, further comprising a tension maintaining tensioner supporting a second power transmission member in a region of connecting the first output unit and the second output unit.
